Europäisches Patentamt

European Patent Office

Office européen des brevets

(11) Numéro de publication: **0 184 503**
**A2**

## (12) DEMANDE DE BREVET EUROPEEN

(21) Numéro de dépôt: 85402336.3

(22) Date de dépôt: 28.11.85

(51) Int. Cl.⁴: **B 29 C 69/02**
**//B29L22:00**

(30) Priorité: 05.12.84 FR 8418523

(43) Date de publication de la demande:
**11.06.86 Bulletin 86/24**

(84) Etats contractants désignés:
**BE CH DE GB IT LI NL SE**

(71) Demandeur: SAPLEST S.A. Société dite:
Sainte Marie en Chanois
F-70320 Faucogney et la Mer(FR)

(72) Inventeur: Lalloz, Guy
15, rue du Bataillon de Choc
Froideconche Luxeuil Les Bains H. Saône(FR)

(72) Inventeur: Joly, Gabriel
2 rue de la Saline
Luxeuil Les Bains (Haute Saône)(FR)

(74) Mandataire: Cabinet BERT, DE KERAVENANT &
HERRBURGER
115, Boulevard Haussmann
F-75008 Paris(FR)

(54) Procédé de fabrication d'une pièce en forme de corps creux et pièce ainsi obtenue.

(57) a) Procédé de fabrication d'une pièce en forme de corps creux et pièce ainsi obtenue;

b) procédé selon lequel on moule des ébauches démoulables dont la forme globale correspond à la forme de la pièce à réaliser, on ne cuit les pièces ainsi réalisées que partiellement pour pouvoir en extraire les noyaux et les assembler enfin en terminant la cuisson;

c) l'invention concerne notamment les techniques de moulage des pièces en matière synthétique.

Fig.3

Croydon Printing Company Ltd

Procédé de fabrication d'une pièce en forme de corps creux
et pièce ainsi obtenue.-

La présente invention concerne un procédé de
fabrication d'une pièce en forme de corps creux, notamment
une pièce non démoulable, en matière synthétique alvéolaire ou expansée, telle que du polystyrène, par moulage par
injection.

Les nombreux avantages d'une matière synthétique alvéolaire telle que le polystyrène expansé, ont
entraîné un développement rapide et important de l'utilisation des matières synthétiques alvéolaires dans des
domaines très différents comme l'isolation thermique des
bâtiments, le calage dans le domaine de l'emballage et plus
récemment la réalisation de modèles perdus pour la fonderie
de pièces en grande série.

En fonderie, il est connu, depuis près de
vingt ans, de réaliser de smodèles perdus en polystyrène
expansé. Ce procédé est encore utilisé pour des pièces
lourdes telles que des bâtis de machines réalisés à l'unité.
Pour faire un tel modèle, on utilise des blocs ou des
plaques que l'on débite aux dimensions et que l'on colle
pour réaliser une forme correspondant au modèle. Puis on
place le modèle dans le sable de fonderie, on tasse le
sable et on coule la fonte ou l'aluminium. Le métal en
fusion fait fondre le modèle en polystyrène expansé et
prend exactement sa place.

Au cours de ces dernières années, il s'est également développé une technique concernant la réalisation en grandes séries de pièces de fonderie de moyennes et petites dimensions. En effet, les caractéristiques des matières synthétiques ont beaucoup évolué au cours des dernières années, leur granulométrie est devenue plus faible et leur densité plus basse, les techniques de transformation ont également évolué. Elles permettent l'injection de pièces à paroi plus mince ayant un plus bel aspect de surface, ce qui a développé la fonderie avec des modèles perdus en polystyrène expansé.

Cette technique est notamment intéressante dans le domaine de l'automobile pour la fabrication de pièces ayant des cavités intérieures telles que, par exemple, les collecteurs d'admission ou d'échappement. En effet, ces nouvelles techniques sont très intéressantes car elles réduisent considérablement les coûts de fabrication des pièces coulées Il subsiste toutefois des difficultés pour la réalisation de certains modèles. En effet, dans le cas évoqué ci-dessus de collecteurs d'admission ou d'échappement, le seul moyen de réalisation des modèles perdus de fonderie consiste à réaliser ces pièces de forme complexe, creuses non démontables, en deux parties en polystyrène expansé, puis de les sécher et de placer chaque partie de pièce sur un gabarit et de les réunir à l'aide d'une colle de type "Hot Melt".

Ce procédé de fabrication quoique plus intéressant que le procédé de fonderie traditionnel, présente toutefois un certain nombre d'inconvénients. Il faut en effet effectuer un collage en reprise après le moulage ce qui se traduit par une augmentation non négligeable du coût de fabrication de la pièce. De plus, la pièce ne présente pas intérieurement et extérieurement un état de surface de qualité aussi bonne que cela serait souhaitable, à cause du joint, des bavures des pièces collées entre elles.

3

La présente invention a pour but de créer un procédé de fabrication de pièces en forme de corps creux en matière synthétique expansée notamment en polystyrène, par moulage par injection, permettant de réduire les opérations de fabrication de telles pièces, d'automatiser quasi complètement ces opérations, d'aboutir à une pièce non seulement très peu coûteuse, compatible en particulier avec son utilisation comme modèle perdu de fonderie, mais ayant également un état de surface irréprochable tant au niveau de la surface intérieure qu'au niveau de la surface extérieure.

A cet effet, l'invention concerne un procédé de fabrication d'une pièce en forme de corps creux en matière synthétique notamment en matière synthétique alvéolaire, procédé selon lequel on réduit la pièce en des parties dont l'assemblage reconstitue la forme de la pièce à obtenir, procédé caractérisé en ce que :

- on moule des ébauches démoulables dont l'ensemble de ces formes correspond à la forme de la pièce à réaliser dans des cavités de moulage formées par des coquilles et des noyaux, en poussant le traitement thermique suffisamment pour stabiliser les ébauches dans les cavités de moulage sans terminer le traitement,

- puis on extrait les noyaux en laissant les ébauches dans les coquilles et on réunit les coquilles de façon à réunir les ébauches pour constituer une ébauche d'ensemble ayant une forme correspondant à celle de la pièce,

- on termine la cuisson et la stabilisation thermique dans la matière synthétique et on démoule la pièce terminée.

Le procédé permet de réaliser des corps creux ayant d'excellentes caractéristiques de la surface tant intérieure qu'extérieure, ne présentant aucune trace aspérité ou déformation auniveau de la réunion des ébauches et ne nécessitent pas d'usinage ou de travail de finition de la pièce creuse terminée.

Le procédé selon l'invention se caractérise par la simplicité des moyens qu'il met en oeuvre. Les moules c'est-à-dire les coquilles et les noyaux sont simples, sans mécanisme compliqué autre que ceux nécessaires au rapprochement et à l'écartement des coquilles et ceux commandant la mise en place et l'enlèvement du ou des noyaux.

L'invention s'applique également mais de façon non exclusive à la réalisation de pièces en forme de corps creux indémoulable c'est-à-dire dont le noyau a une section ou des grandes dimensions supérieures aux dimensions de (des) ouverture(s) de la pièce. Le procédé permet d'éviter la réalisation de la pièce en plusieurs parties qu'il faut coller entre elles. Cela simplifie le procédé de fabrication et permet son automatisation, et les pièces fabriquées ont un aspect de surface impeccable tant à l'extérieur qu'à l'intérieur ce qui est extrêmement important pour des modèles perdus de fonderie servant à réaliser par exemple des tubulures, ou des collecteurs d'admission ou d'échappement de moteur à combustion interne et toutes pièces de fonderie utilisées par exemple pour l'écoulement des fluides.

La qualité des pièces obtenues résulte non seulement de l'absence de cordon de colle ou de ligne de collage, mais aussi de l'état des parties de la pièce au niveau de la jonction des ébauches. En effet, comme d'une part les ébauches sont seulement stabilisées dans leur forme pour permettre l'extraction du noyau sans que le traitement thermique ne soit terminé, et que d'autre part les ébauches restent dans les coquilles qui les maintiennent en forme pendant la phase intermédiaire jusqu'à la nouvelle réunion des coquilles, les bords des ébauches

5

ne peuvent s'abimer ; de plus lors du traitement thermique effectué alors, les ébauches se réunissent de façon parfaitement homogène sans apport de matière étrangère (colle).

Ainsi de façon plus détaillée, dans le cas d'une pièce indémoulable :

- on réduit la pièce de forme non démoulable en des parties démoulables dont l'assemblage reconstitue la forme de la picèe et on moule des ébauches démoulables dont la forme correspond aux parties en lesquelles a été réduite la pièce dans des cavités de moulage formées par des coquilles et des noyaux en poussant le traitement thermique suffisamment pour stabiliser les ébauches dans les cavités de moulage, sans terminer le traitement thermique,

- puis on extrait les noyaux en laissant les ébauches dans les coquilles et on réunit les coquilles de façon à réunir les ébauches pour constituer une ébauche d'ensemble ayant une forme correspondant à celle de la pièce non démoulable, on termine la cuisson et la stabilisation thermique de la matière synthétique et on démoule la pièce terminée.

Suivant une autre caractéristique on met sous pression l'intérieur de l'ébauche d'ensemble pour appliquer cette ébauche contre la paroi des coquilles pendant la cuisson et la stabilisation thermique.

Cette mise sous pression notamment réalisée avec un noyau gonflable applique bien les ébauches contre les coquilles et donne à la pièce un état de surface intérieur parfaitement lisse.

Il est notamment possible d'utiliser cette mise sous pression de l'intérieur de la pièce à l'aide d'un noyau gonflable pour injecter de la vapeur ou tout autre fluide caloporteur.

Après la cuisson, il est possible d'utiliser cette poche qui injecte du fluide froid pour refroidir la pièce ou accélérer son refroidissement, sans avoir à trop refroidir les coquilles (en général métalliques) pour réduire la durée du cycle de fabrication c'est-à-dire augmenter le rendement tout en réduisant la consommation d'énergie au niveau des coquilles.

L'invention concerne également une installation pour la mise en oeuvre du procédé. Cette installation est caractérisée en ce qu'elle comporte :

- un ensemble coquille et de noyau définissant des cavités de moulage d'ébauche,

- des moyens pour réunir des coquilles de façon à reconstituer la forme d'ensemble de la pièce à réaliser,

- des moyens pour appliquer sous pression l'ébauche d'ensemble contre les parois des coquilles.

Suivant une autre caractéristique de l'invention :

- le noyau comporte des pattes servant de surfaces d'appui pour les coquilles,

- le noyau est commun aux deux coquilles.

La présente invention sera décrite plus en détail à l'aide des dessins annexés dans lesquels :

- la figure 1 est une vue en perspective d'une pièce en forme de crops creux en matière synthétique alvéolaire, destinée à être réalisé selon le procédé de l'invention ;

- les figures 2, 3, 4, 5, 6 montrent les différentes phases du procédé de fabrication d'une pièce en forme de corps creux, selon l'invention ;

- la figure 7 est une vue en perspective schématique d'un collecteur réalisable, selon le procédé de l'invention.

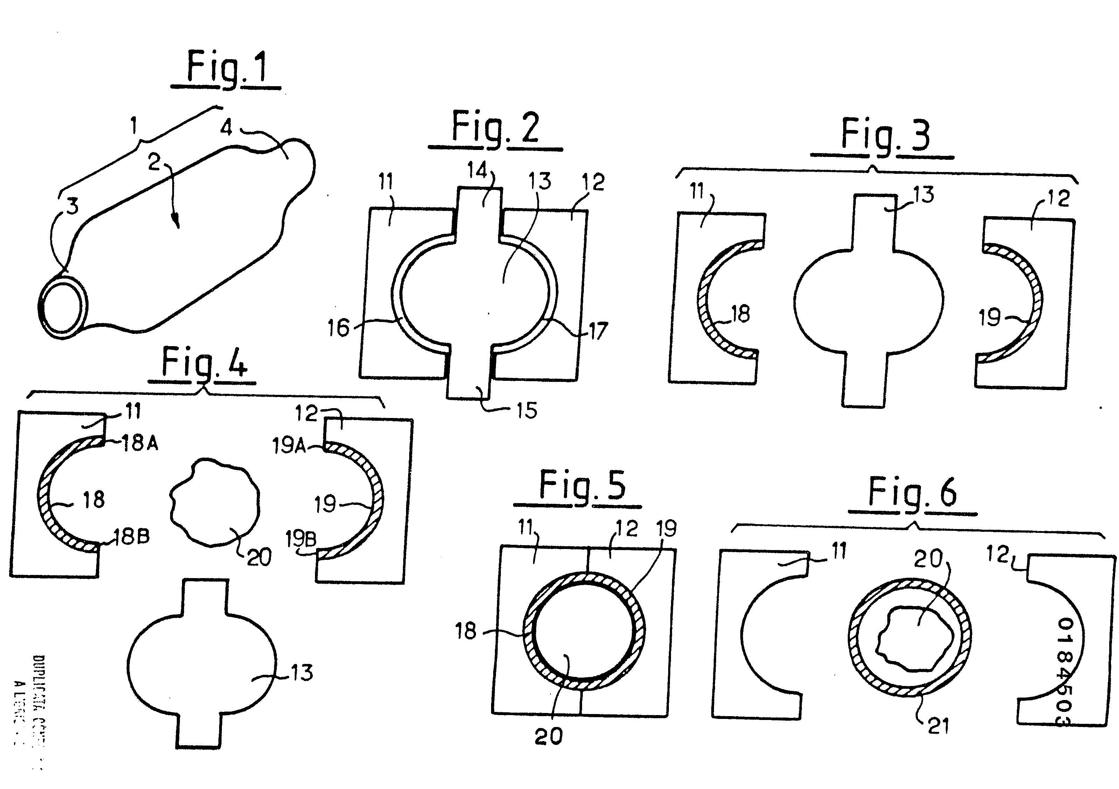

La figure 1 est une vue en perspective d'une pièce en forme de corps creux 1 en matière synthétique alvéolaire que l'on se propose de réaliser selon le procédé de l'invention décrit ci-après à l'aide des figures 2 à 6. Cette pièce creuse présente une partie centrale 2 volumineuse et deux extrémités 3 et 4 de dimensions plus faibles ; une telle pièce est indémoulable ; elle ne peut être réalisée à l'aide d'une coquille et d'un noyau classiques, sauf à utiliser dans certains cas un noyeu complexe démoulable.

Le procédé selon l'invention sera décrit ci-après à l'aide des figures 2 à 6 dans le cas très schématique d'un corps creux cylindrique. En fait, bien que le procédé de l'invention permette de réaliser également des corps creux aussi simples et qui sont démoulables, l'invention s'applique, en particulier à des corps creux qui ne sont pas démoulables dans l'état actuel de la technique.

La figure 2 montre le moule servant à réaliser deux ébauches démoulables et dont la réunion donne la pièce creuse indémoulable.

Dans le cas présent, on suppose que la réduction de la forme de la pièce creuse indémoulable en parties démoulables donne deux parties démoulables. Le moule pour la fabrication des ébauches est réalisé en fonction de cette réduction.

Ainsi le moule se compose de deux coquilles 11, 12 et d'un noyau 13. Le noyau 13 est en fait un noyau combiné ou double puisqu'il est associé à l'une et l'autre des deux coquilles 11-12. Le noyau 13 pourrait également être remplacé par deux noyaux associés respectivement à l'une et l'autre des deux coquilles. Dans le cas d'un moule à plus de deux coquilles il peut y avoir suivant le cas un noyau unique ou plusieurs noyaux.

Dans tous les cas, le ou les noyaux définissent des cavités de moulage avec les coquilles.

8

Dans l'exemple de la figure 2, le noyau 13 comporte deux pattes 14, 15 dont les surfaces tournées vers les coquilles 11-12 servent d'appui à ces coquilles qui peuvent se réunir sur les pattes 14, 15 du noyau 13 pour délimiter deux cavités 16, 17 destinées à réaliser les ébauches démoulables.

La figure 2 montre la première phase du procédé. A ce moment les coquilles 11-12 sont appliquées sur le noyau 13 pour l'injection de la matière synthétique dans les cavités 16, 17 (matière sous la forme de perles). Cette injection se fait pour agglomérer suffisamment les particules de matière synthétique et donner de la tenue aux ébauches réalisées dans les cavités 16, 17 sans toutefois terminer complètement le traitement thermique.

Selon la figure 3, au cours d'une seconde étape qui fait suite à l'étape d'injection et de traitement thermique partiel, représentée à la figure 2, on écarte les coquilles 11, 12 comme cela est représenté, les ébauches 18, 19 restant positionnées dans les coquilles 11, 12. On peut alors extraire le noyau rigide 13.

Selon la figure 4, au cours de la troisième étape du procédé, le noyau 13 ayant été extrait d'entre les coquilles 11, 12, on met en place un noyau 20, extensible, et on referme les coquilles 11, 12, l'une sur l'autre de façon que les bords 18A, 18B de l'ébauche 18 viennent exactement contre les bords 19A, 19B de l'ébauche 19 formant ainsi l'ébauche d'ensemble.

La figure 5 montre la position réunie des coquilles 11, 12 et la réunion des ébauches 18, 19. Lorsque cette réunion est réalisée, on gonfle également le noyau gonflable 20 pour bien appliquer les ébuaches 18, 19 contre les coquilles 11, 12.

Au cours de cette quatrième étape du procédé, on complète le traitement thermique du cycle de fabrication en terminant la cuisson de la pièce formée des

9

ébauches 18, 19 puis on laisse refroidir et stabiliser.

Selon la figure 6, au cours de la cinquième étape du procédé, on dégonfle le noyau extensible 20, on écarte les coquilles 11 ? 12 on extrait le noyau 20 de la pièce 21 ainsi réalisée et on peut extraire la pièce 21 terminée.

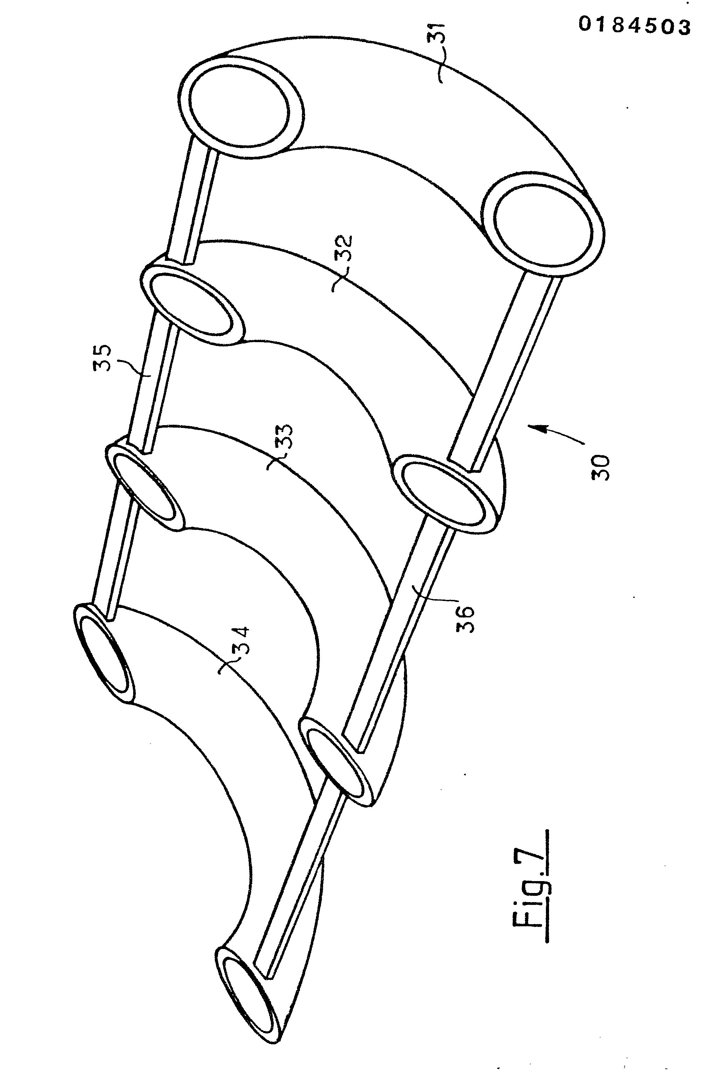

La figure 7 montre un exemple de pièce de forme complexe réalisable à l'aide du procédé de l'invention. Il s'agit d'un collecteur 30 de moteur à combustion interne formé de tubulures 31, 32, 33, 34 réunies par des entretoises 35, 36.

10

REVENDICATIONS

1°) Procédé de fabrication d'une pièce en forme de corps creux en matière synthétique notamment en matière synthétique alvéolaire, procédé selon lequel on réduit la pièce en des parties dont l'assemblage reconstitue la forme de la pièce à obtenir, procédé caractérisé en ce que :

- on moule des ébauches démoulables dont l'ensemble de ces formes correspond aux parties en lesquelles a été réduite la forme de la pièce à réaliser, dans des cavités de moulage formées par des coquilles et des noyaux, en poussant le traitement thermique suffisamment pour stabiliser les ébauches dans les cavités de moulage sans terminer le traitement thermique,

- puis on extrait les noyaux en laissant les ébauches dans les coquilles et on réunit les coquilles de façon à réunir les ébauches pour constituer une ébauche d'ensemble ayant une forme correspondant à celle de la pièce,

- on termine la cuisson et la stabilisation thermique dans la matière synthétique et on démoule la pièce terminée.

2°) Procédé selon la revendication 1, pour la fabrication d'une pièce en forme de corps creux en matière synthétique, non démoulable, procédé caractérisé en ce que :

-on réduit la pièce de forme non démoulable en des parties démoulables dont l'assemblage reconstitue la forme de la pièce et on moule des ébauches démoulables dont la forme correspond aux parties en lesquelles a été réduite la pjèce dans des cavités de moulage formées par des coquilles et des noyaux en poussant le traitement thermique suffisamment pour stabiliser les ébauches dans les cavités de moulage, sans terminer le traitement thermique,

11

   - puis on extrait les noyaux en laissant les ébauches dans les coquilles et on réunit les coquilles de façon à réunir les ébauches pour constituer une ébauche d'ensemble ayant une forme correspondant à celle de la pièce non démoulable, on termine la cuisson et la stabilisation thermique de la matière synthétique et on démoule la pièce terminée.

   3°) Procédé selon l'une quelconque des revendications 1 et 2, caractérisé en ce qu'on met sous pression l'intérieur de l'ébauche d'ensemble pour appliquer cette ébauche contre la paroi des coquilles pendant la cuisson et la stabilisation thermique.

   4°) Procédé selon l'une quelconque des revendications 1 à 3, caractérisé en ce qu'on met l'ébauche d'ensemble sous pression à l'aide d'un fluide caloporteur.

   5°) Installation pour la mise en oeuvre du procédé selon l'une quelconque des revendications 1 à 4, caractérisée en ce qu'elle comporte :

   - un ensemble coquille 1, 12 et de noyau 13, 14, 15 définissant des cavités de moulage d'ébauche 16, 17,

   - des moyens pour réunir des coquilles de façon à reconstituer la forme d'ensemble de la pièce à réaliser,

   - des moyens pour appliquer sous pression l'ébauche d'ensemble contre les parois des coquilles.

   6°) Installation selon la revendication 5, caractérisée en ce que le noyau 13 comporte des pattes 14, 15 servant de surfaces d'appui pour les coquilles 11, 12.

   7°) Installation pour la réalisation de pièces réductibles en deux parties selon l'une quelconque des revendications 5 et 6, caractérisée en ce que le noyau 13 est commun aux deux coquilles 11, 12.

Cabinet
BERT de KERAVENAN & PERMANOER

Fig.1

Fig.2

Fig.3

Fig.4

Fig.5

Fig.6

0184503

30  31  32  33  34  35  36

**Fig.7**